# FASCICULE DE BREVET EUROPEEN

(11) **EP 2 100 250 B1**
(45) Date de publication et mention de la délivrance du brevet: **21.08.2019**
(21) Numéro de dépôt: 07858384.6
(22) Date de dépôt: 27.09.2007
(51) Int. Cl.: G06F 21/60, G06F 21/64, G06F 11/14

(54) **SYSTÈME ET PROCÉDÉ DE SÉCURISATION DE DONNÉES**
SYSTEM UND VERFAHREN ZUR DATENSICHERUNG
SYSTEM AND METHOD FOR SECURING DATA

(30) Priorité: 27.09.2006 FR 0608451
(43) Date de publication de la demande: 16.09.2009
(73) Titulaire: Trustonic SAS, 06560 Valbonne (FR)
(72) Inventeur: APVRILLE, Axelle, F-06330 Roquefort les Pins (FR); FREY, Alexandre, F-92190 Meudon (FR); COLAS, Christophe, F-78420 Carrières sur Seine (FR)
(74) Mandataire: D Young & Co LLP
(86) Numéro de dépôt international: PCT/FR2007/001582
(87) Numéro de publication internationale: WO 2008/037895

(56) Documents cités:
- US-A1- 2002 152 396
- US-A1- 2004 187 006

## Description

L'invention concerne un système et un procédé de sécurisation de données stockées sur un support physique. Elle concerne plus particulièrement un tel système et un tel procédé, dans lequel les données sont sécurisées contre, d'une part, le rejeu et, d'autre part, les altérations ou modifications induites notamment par des interruptions brutales de service.

Le rejeu permet d'accéder frauduleusement à des données par copie illicite du contenu antérieur d'un système de gestion de données. Par exemple, si l'on suppose, qu'à un instant t₀, un système S₀ possède des droits en lecture d'un fichier F, qu'à l'instant t ultérieur à t₀, ces droits sont consommés avec un contenu dudit système égal à S, alors le rejeu permet d'accéder frauduleusement au fichier F en lecture au temps t en recopiant le contenu du système S₀ dans le système S pour obtenir un système contenant S₀ reconnu valide au temps t.

De manière classique, on protège les données des systèmes de l'état de la technique contre le rejeu en utilisant l'envoi d'aléas changeant à chaque session, un horodatage, ou alors, des compteurs monotones.

US 2004/0187006 A1 décrit un système de sécurisation de données comprenant des informations de contrôle ajoutées à chaque donnée.

Les interruptions brutales de service sont susceptibles d'altérer les données contenues dans un support physique par exemple lors de la lecture ou de l'écriture de ces données. Ces interruptions brutales de service sont généralement occasionnées par l'extinction brutale du système de gestion des données, essentiellement, dans le cas d'une coupure du courant d'alimentation électrique ou dans le cas d'un redémarrage intempestif de ce système. Des altérations dans les données écrites ou lues sont par ailleurs susceptibles d'être occasionnées par des attaques, lorsqu'un individu malfaisant modifie intentionnellement le comportement de la lecture ou de l'écriture dans le système de gestion de données, ou alors, dans le cas d'erreurs accidentelles qui surviennent, en particulier, à la suite de la détérioration de la tête de lecture d'un disque dur ou du mécanisme assurant son déplacement.

De manière classique, on protège les données des systèmes de l'état de la technique contre les interruptions brutales de service en organisant des sauvegardes desdites données et en permettant la récupération des données sauvegardées. Par exemple, lorsque le support de données est un disque dur, ce disque est monté en RAID (Redundant Array of Independent Disks ; groupe de disques indépendants) en utilisant un ou plusieurs disques additionnels. On citera en particulier l'arrangement de disques en RAID 1.

Toutefois, cumuler, d'une part, une récupération de données à la suite d'altérations dues à des interruptions brutales de service avec, d'autre part, une protection de ces données contre le rejeu, n'est pas évident. En effet, pour la récupération de données, on souhaite restaurer des données qui ont subi des altérations, alors que, pour interdire le rejeu, on souhaite interdire toute restauration de ces données. Aussi, le cumul d'un système de sauvegarde d'une partition contenant des données et d'une protection de cette partition contre le rejeu incluant des compteurs monotone semble incompatible. Dans le cas contraire, la récupération d'une ancienne partition sauvegardée serait en contradiction avec le système de protection contre le rejeu puisqu'il utiliserait une valeur antérieure du compteur monotone.

Compte tenu de l'état de la technique exposé ci-dessus, un problème que se propose de résoudre l'invention est de réaliser un système et un procédé de sécurisation de données contre, d'une part, le rejeu et, d'autre part, les modifications de données dues notamment à une dernière interruption de service.

La solution proposée de l'invention à ce problème posé a pour premier objet un système de sécurisation de données, caractérisé en ce qu'il comprend :
- un compteur monotone ;
- une entité de calcul ;
- un support physique de données comportant
   - un ou une pluralité de blocs de données sécurisées,
   - un premier bloc maître comprenant la dernière valeur récupérée du compteur monotone, un identifiant du dernier bloc de données écrit sur ledit support, un premier code d'authentification garantissant l'authenticité du ou des blocs de données écrits, un second code d'authentification calculé à partir du dernier bloc de données écrit, ces données étant fixées à une valeur neutre, et un troisième code d'authentification garantissant l'authenticité du premier bloc maître, et
   - un second bloc maître formant une réplique du premier bloc maître ; et
- une clé d'authentification.

Elle a pour second objet un procédé de sécurisation de données, caractérisé en ce qu'il comporte les étapes suivantes de :
fourniture d'un compteur monotone, d'une entité de calcul, d'un support physique de données et d'une clé d'authentification ; et de
écriture, sur ledit support de données, d'un ou d'une pluralité de blocs de données, d'un premier bloc maître comportant la dernière valeur récupérée du compteur monotone, un identifiant du dernier bloc de données écrit sur ledit support, un premier code d'authentification garantissant l'authenticité du ou des blocs de données écrits, un second code d'authentification calculé à partir du dernier bloc de données écrit, ces données étant fixées à une valeur neutre, et un troisième code d'authentification garantissant l'authenticité du premier bloc maître, et d'un second bloc maître formant une réplique du premier bloc maître.

L'invention sera mieux comprise à la lecture de la description non limitative qui va suivre, et au regard des dessins ci-joints, dans lesquels :
- la figure 1A présente, de manière schématique, les différents composants d'un système selon l'invention ;
- la figure 1B présente, de manière schématique, un ensemble de bloc de données enregistrés sur un support physique, ainsi que deux blocs maîtres associés à ces données, pour leur sécurisation selon l'invention ;
- la figure 2 présente les différentes étapes conduisant à la vérification de la cohérence d'un système selon l'invention, lors du démarrage dudit système ;
- la figure 3 présente les différentes étapes conduisant à l'écriture de nouvelles données sur le support physique du système selon l'invention ;
- la figure 4A illustre, de manière schématique, les étapes conduisant à la vérification d'un code d'authentification d'un bloc maître selon l'invention ;
- la figure 4B illustre, de manière schématique, les étapes conduisant au calcul d'un code d'authentification d'un bloc maître selon l'invention ;
- la figure 5 présente les différentes étapes conduisant à la lecture de données écrites sur un support de données d'un système selon l'invention ;
- la figure 6 présente les différentes étapes d'une procédure de récupération de données selon l'invention ; et
- la figure 7 présente les différentes étapes d'une procédure de récupération d'un bloc maître selon l'invention.

Dans la présente invention, on considère qu'une donnée quelconque est authentique si il est permis de garantir que cette donnée n'a pas été illicitement modifiée ou remplacée par un tiers. L'authenticité de la donnée est assurée notamment par un algorithme cryptographique conduisant à l'obtention d'une donnée chiffrée appelée MAC (Message Authentication Code - code d'authentification de message). Un tel algorithme utilise une clé secrète et opère sur une donnée à protéger. Il ne peut être vérifié qu'en fournissant la clé secrète adéquate. Il produit un code d'authentification, généralement court, qui garantit l'origine et l'intégrité de la donnée. Une seule modification dans la donnée et le code change.

L'invention concerne un système 10 de sécurisation de données. Dans un exemple, ce système est un système embarqué dans un dispositif du type téléphone portable, comportant notamment un boîtier muni d'un clavier, d'un écran, d'un microphone, d'un haut-parleur, d'une carte électronique, d'un module pour l'émission et la réception de données, d'un module d'identification abonné (SIM) et d'une batterie pour l'alimentation électrique. La carte électronique comporte au moins un microcontrôleur, une mémoire de type RAM, une mémoire de type flash, et un système de bus. L'exploitation du téléphone est gérée par un système d'exploitation et un ensemble d'applications chargées par exemple dans une mémoire de ce téléphone.

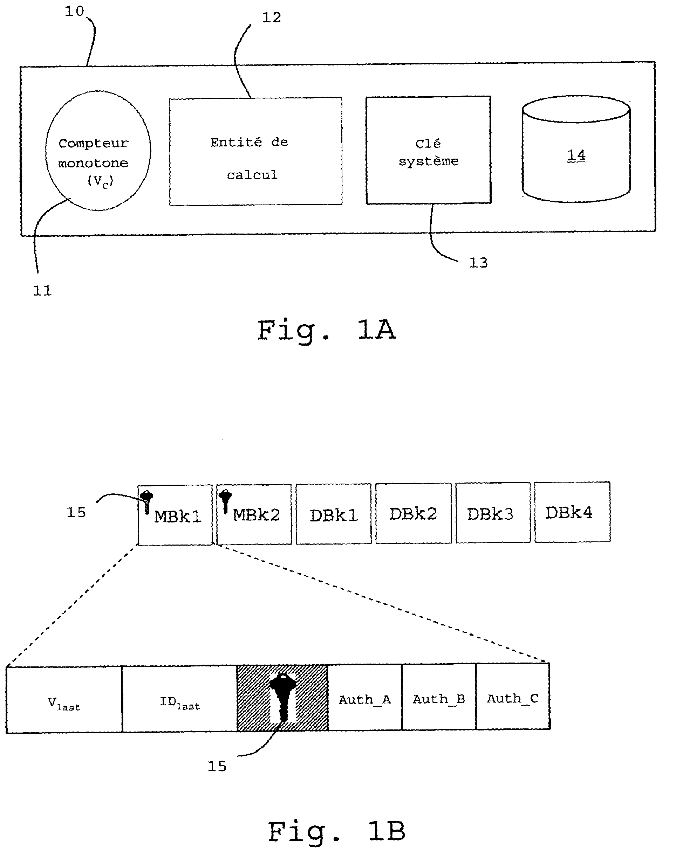

Ainsi que cela est montré à la figure 1A, le système selon l'invention comprend un compteur monotone 11, une entité de calcul 12, une clé système 13 et un support physique 14 de données.

Le système 10 est notamment un système de gestion de partitions ou un système de gestion de fichiers.

Le compteur monotone 11 est un compteur qui ne peut que s'incrémenter d'une seule unité. La valeur courante V_{c} de ce compteur peut être récupérée. On notera cependant que la récupération de cette valeur courante n'incrémente pas le compteur 11. Ainsi, le compteur 11 est susceptible de répondre à une première instruction d'incrémentation et à une seconde instruction, différente de la première instruction, de récupération de sa valeur courante. On notera que la valeur courante du compteur monotone 11 est, selon un mode de réalisation préférentiel de l'invention, stockée chiffrée dans ce compteur. Dans ce cas, cette valeur ne peut être récupérée que par une entité dûment authentifiée du système.

L'entité de calcul 12 est une entité physique ou une entité logique. Lorsqu'il s'agit d'une entité physique, il s'agit par exemple d'un microprocesseur ou d'un microcontrôleur éventuellement dédié à des applications de calcul tel qu'un crypto-processeur. Lorsqu'il s'agit d'une entité logique, il s'agit par exemple d'un logiciel capable d'effectuer des calculs sur un processeur générique. C'est cette entité 12 qui effectue les calculs notamment de MAC, ou les autres chiffrements et déchiffrements, ainsi que les vérifications requises selon la présente invention. Cette entité utilise éventuellement des ressources système non présentées telles que des ressources en mémoire vive. Selon un mode de réalisation préférentiel de l'invention, l'entité de calcul 12 calcule des MACs sur des groupes d'un ou de plusieurs blocs de données. Elle conserve les résultats de ces calculs en mémoire vive. Les codes d'authentification Auth_A et Auth_B correspondent à un MAC de ces résultats. Plus précisément, il s'agit d'un MAC d'un ensemble de MAC du 1^{er} groupe de blocs de données concaténé à un MAC du 2^{ème} groupe de blocs de données, etc..., jusqu'à ce que tous les groupes soient pris en compte. L'entité de calcul 12 utilise donc les résultats précités pour le calcul des MAC des codes d'authentification Auth_A et Auth_B, la taille des groupes étant notée dans le bloc maître.

La clé système 13 est une clé cryptographique accessible aux seules entités autorisées par le système 10. Typiquement, elle n'est accessible que depuis ce système.

Le support physique 14 de données est un support assurant le stockage persistant de données informatiques. Il s'agit par exemple d'un disque dur, d'une mémoire de type flash, voire de disques amovibles de type disquette.

Ainsi que cela est montré à la figure 1B, le support 14 comporte un ou une pluralités de blocs de données DBk contigus et deux blocs maîtres contigus, un premier MBk1 et un second MBk2 blocs maîtres, lesdits blocs maîtres étant associés auxdits blocs de données et contigus à ceux-ci, le bloc maître MBk2 étant une réplique du bloc maître MBk1. Autrement dit, les blocs maîtres MBk1 et MBk2 sont normalement égaux. Toutefois, ils sont susceptibles d'être différents notamment dans le cas d'une erreur d'écriture due par exemple à une interruption de service, ou alors, dans le cas d'une attaque portant sur l'un desdits blocs.

La taille des blocs de données DBk est configurable. Par exemple, elle est de 256 octets. Le nombre de blocs de données présents, contenant les données sécurisées selon l'invention, est quelconque. Dans l'exemple de la figure 1B, on a représenté quatre blocs DBk1, DBk2, DBk3 et DBk4.

Les blocs maîtres MBk1 et MBk2 ont une taille minimale suffisante pour contenir les champs de données qui vont être décrits dans la suite du présent exposé de l'invention. En pratique, cette taille minimale est de l'ordre de 100 octets.

Chaque bloc maître MBk comporte les champs suivants : la dernière valeur Vₗₐₛₜ récupérée (ou retournée) du compteur monotone 11, l'identifiant IDₗₐₛₜ du dernier bloc de données DBk écrit sur le support de données 14, une clé d'authentification 15 chiffrée par la clé système 13, un code d'authentification Auth_A garantissant l'authenticité et l'intégrité des blocs de données DBk1, ..., DBk4, un code d'authentification Auth_B calculé à partir du dernier bloc de données écrit et dont les données sont fixées à une valeur neutre, ladite valeur neutre étant par exemple égale à une suite de zéros, et à partir des données des autres blocs de données, qui sont conservées telle qu'elles, et un code d'authentification Auth_C garantissant l'authenticité et l'intégrité du bloc maître MBk c'est-à-dire, plus exactement, l'authenticité et l'intégrité dudit bloc maître MBk, dont le champ Auth_C est mis à une valeur neutre. En effet, Auth_C est calculé à partir du bloc maître MBk dont le champ Auth_C est mis à une valeur neutre, typiquement une suite de zéros. Lorsque Auth_C est calculé, sa valeur est introduite dans le bloc maître MBk. En outre, chaque bloc maître MBk comporte éventuellement d'autres informations relatives par exemple à sa taille, ou son nombre de secteurs, ces informations n'étant pas montrées à la figure 1B.

Selon l'invention, les blocs de données DBk sont susceptibles d'être chiffrés par une clé de chiffrement. Certains calculs de MAC, effectués par l'entité de calcul 12, sont alors mis en oeuvre sur des blocs de données chiffrés. La clé de chiffrement est susceptible d'être stockée dans les blocs maîtres, ou alors, directement sur le système lui-même. Elle peut alternativement être chiffrée par la clé système. Dans ce cas, seule la clé système est sur le système.

Les blocs de données DBk ne sont pas modifiés et les blocs maîtres MBk ne sont pas intercalés entre lesdits blocs de données DBk. Ainsi, il est possible d'effectuer une lecture directe des données des blocs de données DBk.

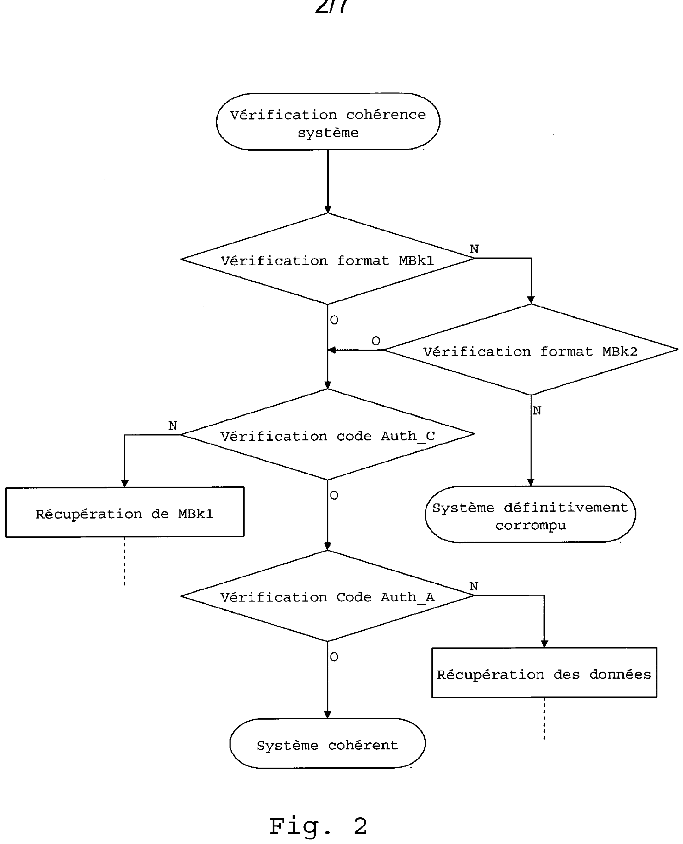

La cohérence du système selon l'invention est vérifiée lors de son démarrage. Ainsi que cela est présenté à la figure 2, pour la vérification de la cohérence du système selon l'invention, on vérifie tout d'abord le format du premier bloc maître MBk1. Cette vérification de format comprend par exemple des étapes de vérification de la licéité de l'identifiant IDₗₐₛₜ, de la dernière valeur Vₗₐₛₜ retournée du compteur monotone 11, de la présence des codes d'authentification Auth_A, Auth_B et Auth_C et de la présence de la clé d'authentification 15 chiffrée par la clé système 13. Dans le cas où le format du premier bloc maître MBk1 est illicite, on vérifie le format du second bloc maître MBk2. Dans le cas où le format du second bloc maître MBk2 est illicite, on considère que le système est définitivement corrompu, les données n'étant pas sûres, ledit système ayant par exemple subit une attaque. Une alarme peut alors être présentée à l'utilisateur du système et l'accès aux données est classiquement interdit. Par contre, dans le cas où le format du second bloc maître MBk2 est licite, on remplace le premier block maître MBk1 par le second bloc maître MBk2.

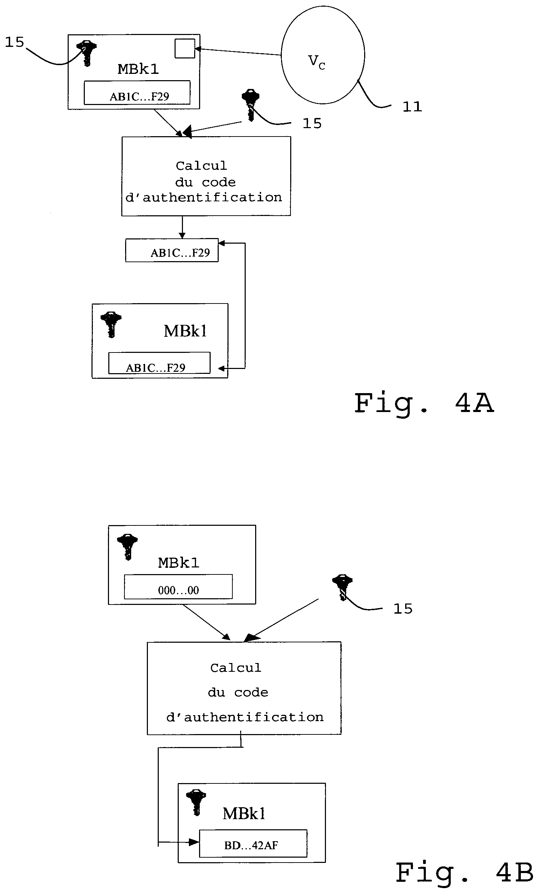

Lorsque le format du bloc MBk1 est licite ou lorsque le format du bloc MBk1 est illicite mais que le format du bloc MBk2 est licite et que, ainsi que cela a été indiqué précédemment, le bloc MBk1 a été remplacé par le bloc MBk2, on vérifie, selon une étape ultérieure du procédé selon l'invention, le code d'authentification C. Cette vérification, schématisée à la figure 4A, consiste à invoquer la fonction cryptographique MAC en lui fournissant, d'une part, la clé d'authentification 15 déchiffrée à l'aide de la clé système 13 et, d'autre part, le contenu du bloc maître MBk1 dont le champ de la valeur compteur monotone est mis à jour par la valeur courante V_{c} contenue dans ce compteur 11. On compare alors le résultat obtenu avec le code d'authentification Auth_C du bloc maître MBk1. Si ce résultat est identique au code d'authentification Auth_C du bloc MK1, alors le bloc MBk1 est authentique. Dans le cas contraire, il n'est pas considéré comme authentique et la procédure de récupération du bloc maître et déclenchée (figure 2).

Si le bloc MBk1 est authentique, on vérifie alors, selon une autre étape du procédé selon l'invention, le code d'authentification Auth_A. Cette vérification fait également appel à un MAC qui est calculé sur l'ensemble des données contenues dans les blocs de données DBk du système, éventuellement chiffrés. Avantageusement, ce MAC peut être calculé, dans un premier temps, sur des groupes de blocs de données puis, dans un deuxième temps, sur les codes d'authentification ainsi calculés des groupes de données. Dans le cas où la vérification du code Auth_A est correcte, le système est considéré comme cohérent. Dans le cas contraire, la procédure de récupération des données est déclenchée.

Après la vérification de la cohérence du système, pour l'écriture de nouvelles données dans le système, on procède, selon l'invention, comme suit.

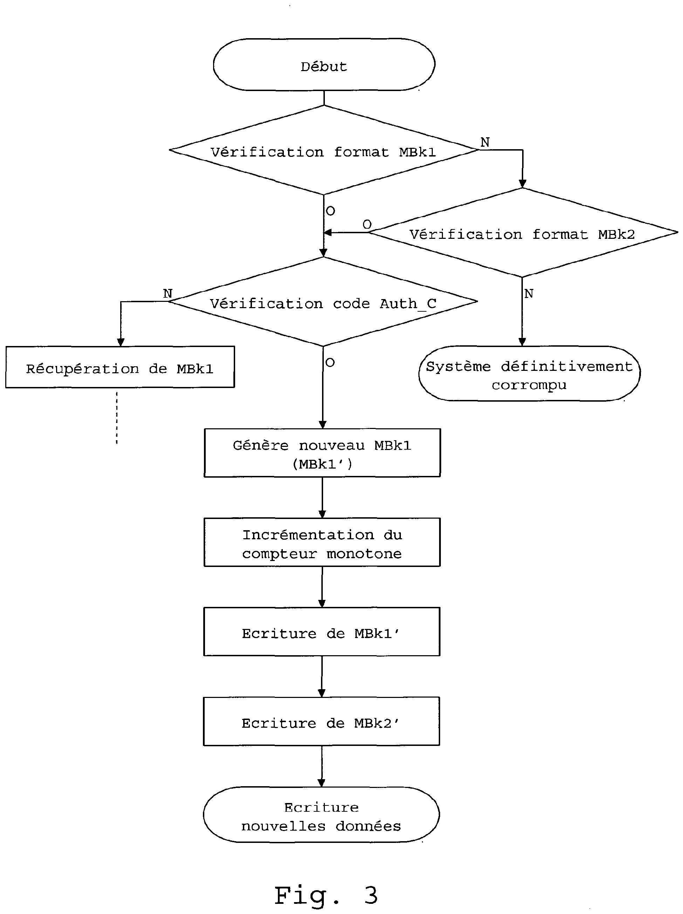

Tout d'abord, ainsi que cela est montré à la figure 3, on vérifie le format du bloc MBk1 et, le cas échéant, du bloc MBk2, à la manière décrite précédemment pour la vérification de la cohérence du système. De même que précédemment, si ces vérifications échouent, alors le système est définitivement corrompu.

Puis, dans une étape ultérieure, on vérifie le code Auth_C. De même que précédemment, si ce code n'est pas vérifié, on lance la procédure de récupération du bloc maître. Par contre, si ce code est vérifié, alors le bloc MBk1 est authentique et un nouveau bloc maître MBk1' est généré, sans que le code Auth_A soit vérifié. En effet, on suppose que, pendant que le système est en cours d'exécution, des tiers malfaisants n'interagiront pas avec ce système.

Pour générer le nouveau bloc maître MBk1', les étapes suivantes sont mises en oeuvre. Tout d'abord, l'identifiant IDₗₐₛₜ du dernier bloc de données écrit est mis à jour. Ensuite, la valeur courante V_{c} du compteur monotone 11 est récupérée et la valeur V_{c}+1 est écrite dans le nouveau bloc maître MBk1'. Les éventuelles autres informations du bloc maître sont alors mises à jour. Dans le nouveau bloc maître MBk1', on calcule alors, à l'emplacement prévu pour les codes d'authentification Auth_A et Auth_B, une valeur prédéfinie, par exemple une suite de zéros, et on met à jour le bloc maître MBk1'. On calcule enfin le nouveau code d'authentification Auth_C puis on note la valeur correspondante dans le bloc maître MBk1'. Les étapes de ce calcul sont schématisées à la figure 4B. Il est effectué à partir du nouveau bloc maître ainsi constitué, c'est-à-dire avec, notamment, le nouvel identifiant de données, la valeur de compteur monotone égale à V_{c}+1, et les codes d'authentification A et B des nouvelles données.

Une fois et seulement une fois que le nouveau bloc maître MBk1' a été généré, on incrémente la valeur du compteur monotone à V_{c}+1, puis on écrit le bloc maître MBk1' dans le système, on écrit également le deuxième bloc maître MBk2', qui est une duplication du bloc maître MBk1 et, finalement, on écrit les nouvelles données.

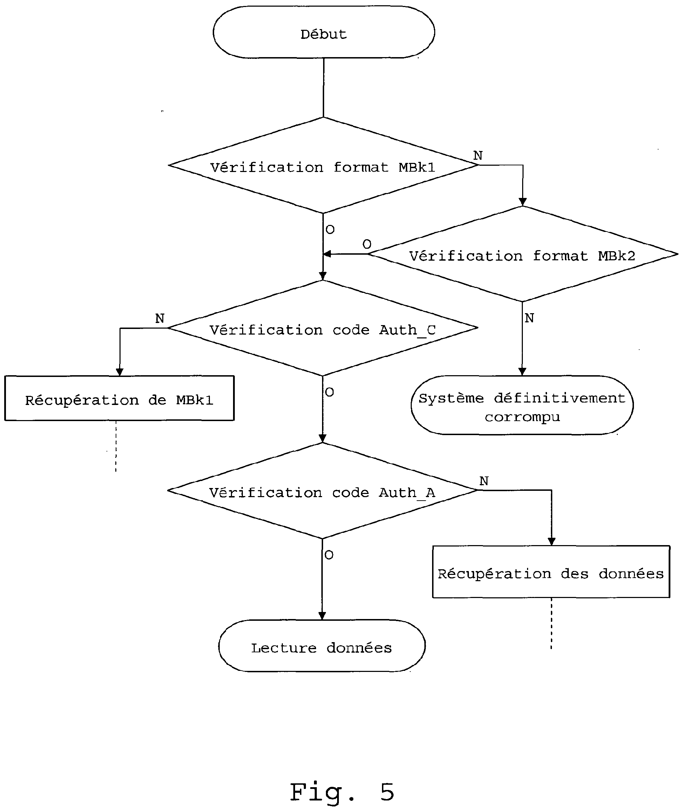

Pour la lecture des données, ainsi que cela est montré à la figure 5, on procède comme suit. De même que précédemment, on vérifie le format du bloc maître MBk1. Si celui-ci est illicite, on vérifie le format du bloc maître MBk2. Si cette seconde vérification échoue, on considère le système comme définitivement corrompu.

Par contre, dans le cas où la vérification du format de l'un des blocs maîtres MBk1 ou MBk2 est achevée avec succès, on procède aux étapes suivantes. Tout d'abord, on vérifie le code Auth_C en utilisant la valeur courante V_{c} du compteur monotone 11. Dans le cas où le bloc maître MBk1 n'est pas authentique, on lance la procédure de récupération du bloc maître. Dans le cas contraire, on vérifie le code Auth_A. Si cette vérification échoue, on lance la procédure de récupération des données. Dans le cas contraire, on lit les données correspondant à l'identifiant de données fourni. Optionnellement, si le chiffrement est activé, on lit les données puis on les déchiffre et on renvoie les données déchiffrées.

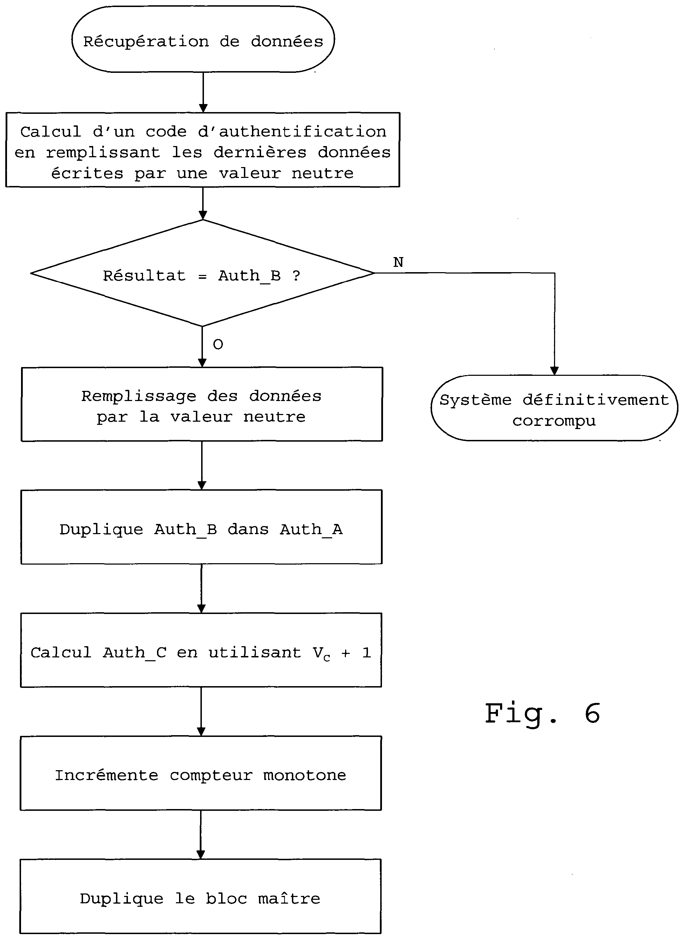

La procédure de récupération des données est présentée à la figure 6. Cette procédure s'effectue automatiquement, sans qu'il soit nécessaire de rebouter le système. Elle comporte les étapes suivantes. Tout d'abord, on calcule un code d'authentification en remplissant les dernières données écrites par une valeur neutre prédéfinie, par exemple une suite de zéros. Ces dernières données écrites sont identifiées par un identifiant noté dans le bloc maître.

Si le résultat du calcul précité est égal au code d'authentification Auth_B, alors on procède comme suit. Tout d'abord, on remplit les données effectivement de la valeur neutre. Ensuite, on duplique le code d'authentification Auth_B dans le code Auth_A. On calcule une nouvelle fois le code Auth_C ainsi modifié en utilisant la valeur courante du compteur monotone V_{c} + 1, ce calcul s'effectuant sur un bloc maître MBk dont l'emplacement du code d'authentification du bloc maître est préalablement rempli de la valeur neutre. On incrémente enfin le compteur monotone, et on duplique le bloc maître.

Si le résultat du calcul précité n'est pas égal au code d'authentification Auth_B, le système de données doit être considéré comme définitivement corrompu.

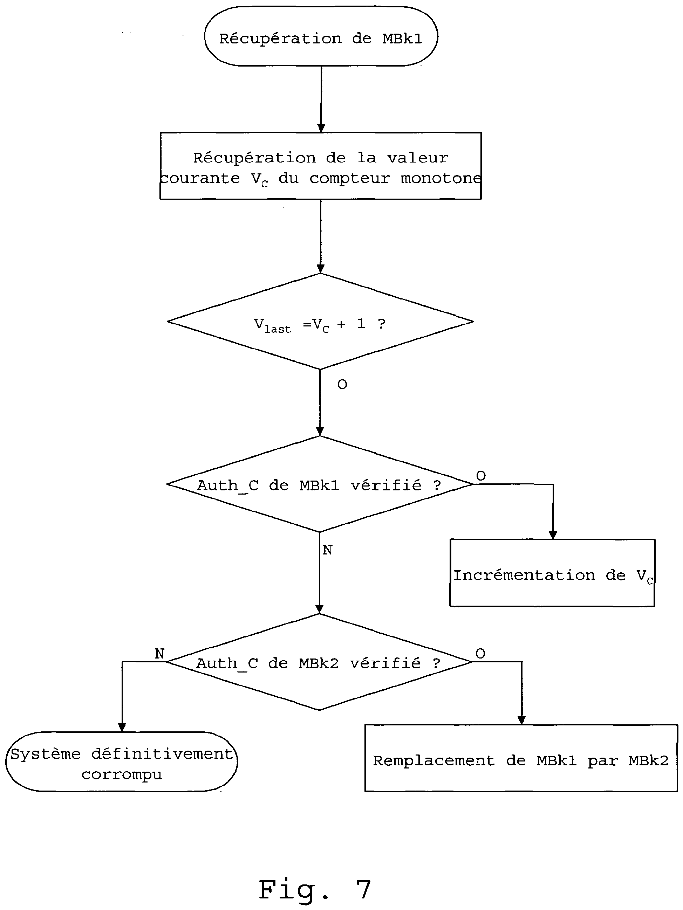

La procédure de récupération automatique d'un bloc maître est présentée à la figure 7. Elle est activée lorsque le code Auth_C indique que du bloc maître MBk n'est pas authentique. Cette procédure est mise en oeuvre de la manière suivante. Tout d'abord, on récupère la valeur courante du compteur monotone V_{c}. Si la valeur du compteur monotone indiquée dans le bloc maître est égale à la valeur V_{c}+1, on vérifie le code d'authentification C en supposant que la valeur du compteur monotone est égale à la valeur courante V_{c}+1.

Si cette vérification est réalisée avec succès, on incrémente la valeur V_{c} du compteur monotone 11. En pratique, ce cas survient lorsque qu'il y a une interruption brutale de l'écriture juste avant l'incrémentation du compteur monotone 11.

Par contre, si cette vérification n'est pas réalisée avec succès, on vérifie le code Auth_C du second bloc MBk2. Dans le cas où cette ultime vérification est réalisée avec succès, alors on remplace le bloc MBk1 par le bloc MBk2. Dans le cas, contraire, le système est corrompu et non récupérable.

De manière générale, on notera que, dans le cas où les blocs de données sont chiffrés par une clé de chiffrement contenue dans les blocs maîtres, l'écriture des blocs de données est précédée d'une étape de chiffrement de ces données. Pour la lecture, lesdits blocs sont également préalablement déchiffrés. Le système de récupération des données est également légèrement modifié puisque le code d'authentification Auth_A est défini à partir de données chiffrées. Il en va de même pour le code d'authentification Auth_B qui est défini à partir d'un dernier bloc contenant des valeurs neutres chiffrées.

Ainsi que cela est expliqué dans les exemples de mise en oeuvre ci-après, le système selon l'invention est résistant aux rejeux.

Supposons que le système comporte deux blocs maîtres authentiques MBk1 et MBk2, des données de contenu DBk, avec une valeur courante de compteur monotone égale à V_{c}. Plus tard, le système est modifié, avec des blocs maîtres authentique MBk1' et MBk2', des données de contenu DBk' et une valeur de compteur monotone égale à V_{c}+1.

Si un attaquant remplace les données DBk' par les données DBk, et les blocs maîtres MBk1' et MBk2' par les blocs MBk1 et MBk2, respectivement, alors la vérification du code d'authentification C des blocs MBk1 et MBk2 échoue car ces blocs ont été calculés avec la valeur V_{c} alors que la valeur courante actuelle du compteur monotone est V_{c}+1.

Si un attaquant remplace uniquement les données DBk' par les données DBk, mais conserve les blocs maîtres MBk1' et MBk2', alors le bloc MBk1' est authentique mais le code d'authentification Auth_A de ces données ne l'est pas puisqu'il porte sur les données DBk' alors que ce bloc est maintenant associé aux données DBk. Si les modifications de l'attaquant portent sur le dernier bloc de données écrit, alors une récupération du système aura lieu et le dernier bloc de données sera rempli par la valeur neutre.

Enfin, si un attaquant remplace les données DBk' par des données par exemple DBk et forge un bloc maître DBk1" identique au bloc maître MBk1' sauf qu'il indique une valeur de compteur monotone Vₗₐₛₜ égale à V_{c} et non pas V_{c}+1, le code d'authentification Auth_C du bloc maître MBk1' ne sera pas valide puisque la valeur courante du compteur monotone est V_{c}+1.

De même, et ainsi que cela est expliqué dans les exemples de mise en oeuvre ci-après, le système selon l'invention est résistant aux modifications notamment dues à des interruptions brutales de service telles que le redémarrage du système ou une coupure d'alimentation électrique.

Supposons que le système selon l'invention comporte deux blocs maîtres MBk1 et MBk2, des données DBk et une valeur de compteur monotone égale à V_{c}.

Si on souhaite écrire de nouvelles données DBk' mais qu'une coupure de courant intervient après l'écriture du bloc maître et avant l'incrémentation du compteur monotone, le système est alors dans un état tel qu'il comporte un bloc maître MBk1', un bloc maître MBk2, des données DBk et un compteur monotone à une valeur V_{c}. La vérification du code d'authentification Auth_C du bloc MBk1' échoue alors car celui-ci a été calculé avec une valeur de compteur à V_{c}+1 alors que la valeur courante est V_{c}. La procédure de récupération du bloc maître est alors activée. Il se trouve que la valeur de compteur notée dans MBk1' est bien la valeur courante + 1. On vérifie alors le bloc maître MBk1' en supposant que le compteur est égal à la valeur courante +1, ce qui fonctionne. On incrémente donc le compteur monotone et le système est de nouveau cohérent.

Si, de même que précédemment, on souhaite écrire de nouvelles données DBk' et qu'une coupure de courant intervient juste après l'incrémentation du compteur monotone, on obtient alors un système avec des blocs maîtres MBk1', MBk2, DBk et une valeur de compteur égale à V_{c}+1. La vérification du code d'authentification C de MBk1' réussit puisque le compteur est à V_{c}+1. Toutefois, la vérification du code d'authentification A échoue car on s'attend aux données DBk' et non pas DBk. La procédure de récupération des données est alors activée. On vérifie le code d'authentification B en utilisant des valeurs neutres pour le dernier bloc de données écrit. Il apparaît que cela correspond à DBk. La vérification réussit donc. On rétablit enfin le système dans un état correct en utilisant des valeurs neutres dans le dernier bloc écrit et en rectifiant le bloc maître. Le système est, dans cet exemple aussi, de nouveau cohérent.

On notera que, si la coupure d'alimentation électrique du système intervient après l'écriture du deuxième bloc maître, le traitement est identique au cas précédent.

On notera enfin que, si la coupure du courant d'alimentation électrique du système intervient après l'écriture du dernier bloc de données, le système est alors dans un état cohérent et aucune correction n'est à apporter.

En définitive, la récupération de la dernière donnée écrite est possible selon l'invention grâce aux trois mécanismes suivants.

Premièrement, l'écriture suit de manière stricte les quatre étapes successives suivantes : le calcul et l'écriture du bloc maître à l'aide de la valeur courante du compteur monotone + 1 ; l'incrémentation de la valeur du compteur monotone ; l'écriture du second bloc maître ; et l'écriture du dernier bloc de données.

Deuxièmement, le bloc maître contient un code d'authentification Auth_B et l'identifiant du dernier bloc de données écrit.

Troisièmement, le bloc maître est lui-même dupliqué dans le cas où l'erreur survient au moment même de l'écriture du bloc maître.

Le système selon l'invention, tel qu'exposé dans le mode de réalisation ci-dessus, permet de récupérer uniquement la dernière erreur survenue notamment suite à une interruption de service. Toutefois, l'homme du métier pourra, en ajoutant d'autres blocs maîtres, récupérer des erreurs antérieures. Par ailleurs, le système selon l'invention, tel qu'exposé dans le mode de réalisation ci-dessus, ne permet pas de récupérer une pluralité d'erreurs affectant plusieurs blocs distincts de données. Toutefois, là encore, l'homme du métier pourra, en ajoutant, dans les blocs maîtres, des champs additionnels de codes d'authentification Auth_B, procéder à la récupération de données affectées par des erreurs dans une pluralité de blocs de données.

Finalement, le système selon l'invention cumule les trois propriétés suivantes de résistance aux modifications non souhaitées et au rejeu et de récupération automatique en cas de panne.

## Revendications

1. Système (10) de sécurisation de données (DBk) comprenant:
un compteur monotone (11) ;
une entité de calcul (12) ;
un support physique (14) de données comportant
un ou une pluralité de blocs de données (DBk1, DBk2, DBk3, DBk4),
un premier bloc maître (MBk1 comprenant une valeur égale à une valeur courante du compteur monotone (11) plus 1 (V_{c} + 1) un identifiant (IDₗₐₛₜ) du dernier bloc données (DBk) écrit sur ledit support (14), un premier code d'authentification (Auth_A) garantissant l'authenticité du ou des blocs de données écrits, un second code d'authentification (Auth B) calculé à partir du dernier bloc de données écrit, ces données étant fixées à une valeur neutre, et un troisième code d'authentification (Auth_C) garantissant l'authenticité du premier bloc maître (MBk1), et
un second bloc maître (MBk2) formant une réplique du premier bloc maître (MBk1) ; et
une clé d'authentification (15).

2. Système (10) selon la revendication 1, **caractérisé en ce que** le premier code d'authentification (Auth_A) garantit en outre l'intégrité du ou des blocs de données écrits et **en ce que** le troisième code d'authentification (Auth_C) garantit en outre l'intégrité du bloc maître.

3. Système (10) selon l'une des revendications 1 ou 2, **caractérisé en ce que** le second code d'authentification (Auth_B) est calculé à partir du dernier bloc de données écrit, les données de ce dernier bloc étant fixées à une valeur neutre, et à partir des données des autres blocs de données, qui sont conservées telles qu'elles.

4. Système selon l'une des revendications 1 à 3, **caractérisé en ce que** le clé d'authentification (15) est contenue dans le premier (MBk1) et le second (MBk2) blocs maîtres et
**en ce qu'**il comprend en outre avantageusement une clé système (13), ladite clé d'authentification (15) étant avantageusement chiffrée par ladite clé système (13) .

5. Système (10) selon l'une des revendications 1 à 4, **caractérisée en ce que** le blocs de données (DBk1, DBk2, DBk3, DBk4) sont chiffrés par une clé de chiffrement,
la clé de chiffrement étant avantageusement chiffrée par le clé système (13).

6. Procédé de sécurisation de données comportant les étapes suivantes de :
fourniture d'un compteur monotone (11), d'une entité de calcul (12), d'un support physique (14) de données et d'une clé d'authentification (15) ; et de
écriture, sur ledit support (14), d'un ou d'une pluralité de blocs de données (DBk1, DBk2, DBk3, DBk4), d'un premier bloc maître (MBk1) comprenant une valeur égale à une valeur courant du compteur monotone (11), plus 1 (V_{c}+1), un identifiant (IDₗₐₛₜ) du dernier bloc de données (DBk) écrit sur ledit support (14), un premier code d'authentification (Auth_A) garantissant l'authenticité du ou des blocs de données écrits, un second code d'authentification (Auth_B) calculé à partir du dernier bloc de données écrit, ces données étant fixées à une valeur neutre, et un troisième code d'authentification (Auth_C) garantissant l'authenticité du premier bloc maître (MBk1), et d'un second bloc maître (MBk2) formant une réplique du premier bloc maître (MBk1) .

7. Procédé selon la revendication 6, **caractérisé en ce que** la cohérence du système (10) est vérifié à son de démarrage.

8. Procédé selon la revendication 7, **caractérisé en ce que**, pour la vérification de la cohérence du système (10), on vérifie la licéité du format du premier bloc maître (MBk1) et, dans le cas où ledit premier bloc maître (MBk1) est illicite, on vérifie la licéité du second bloc maître (MBk2) sachant que, dans le cas où le format du second bloc maître (MBk2) est licite, on remplace le premier bloc maître (MBk1) par le second bloc maître (MBk2) et, dans le cas où le format du second bloc maître (MBk2) est illicite, on considère le système comme définitivement corrompu.

9. Procédé selon la revendications 7 ou 8, **caractérisé en ce que**, pour la vérification de la cohérence du système (10), on vérifie le troisième code d'authentification (Auth_C) puis, dans le cas où ledit troisième code d'authentification (Auth_C) est vérifié avec succès, on vérifie le premier code d'authentification (Auth_A), sachant que, dans le cas où la verification du troisième code d'authentification (Auth_C) échoue, on déclenche une procédure de récupération du bloc maître (MBk1) et que, si la vérification du premier code d'authentification (Auth_A) échoue, on déclenche une procédure de récupération des données.

10. Procédé selon l'une des revendications 6 à 9, **caractérisé en ce que**, pour l'écriture de nouvelles données, on vérifie la licéité du format du bloc maître (MBk1) puis on vérifie le troisième code d'authentification (Auth_C).

11. Procédé selon l'une des revendications 6 à 10, **caractérisé en ce que**, pour l'écriture de nouvelles données, on génère un nouveau premier bloc maître (MBk1'), on incrémente le compteur monotone (11), on écrit le nouveau premier bloc maître (MBk1'), on écrit le nouveau second bloc maître (MBk2') puis on écrit les nouvelles données.

12. Procédé selon la revendication 11, **caractérisé en ce que**, pour générer le nouveau premier bloc maître (MBk1'), on met à jour l'identifiant du dernier bloc de données on récupère la valeur courante du compteur monotone (11), on note la valeur courant (V_{c}) plus 1 de ce compteur dans le nouveau premier bloc maître (MBk1'), puis on calcule les codes d'authentification à partir du nouveau premier bloc maître (MBk1') ainsi constitué.

13. Procédé selon l'une des revendications 6 à 12, **caractérisé en ce que**, pour la lecture de données, on vérifie la licéité du premier bloc maître (MBk1) puis on vérifie le troisième code d'authentification (Auth C).

14. Procédé selon l'une des revendications 6 à 13, **caractérisé en ce qu'**il comporte une étape de récupération des données, cette étape s'effectuant automatiquement, sans que le système (10) soit rebouté.

15. Procédé selon la revendication 14, **caractérisé en ce que**, pour la récupération des données, on calcule un code d'authentification en remplissant les dernières données écrites par une valeur neutre prédéfinie et, si le résultat de ce calcul est égal au second code d'authentification (Auth_B), on remplit les données de la valeur neutre et on duplique le second code d'authentification (Auth_B) dans le premier code d'authentification (Auth_A), on calcule le troisième code d'authentification (Auth_C) en utilisant la valeur courant du compteur monotone plus 1, puis on incrémente le compteur monotone et on duplique le bloc maître.

16. Procédé selon l'une des revendications 6 à 15, **caractérisé en ce qu'**il comporte une étape de récupération automatique d'un bloc maître.

17. Procédé selon la revendication 16, **caractérisé en ce que**, pour la récupération d'un bloc maître, on récupère la valeur courante du compteur monotone, et si la valeur du compteur monotone indiquée dans le bloc maître est égale a cette valeur plus 1, on vérifie le troisième code d'authentification (Auth_C) en supposant que la valeur du compteur monotone est égale à la valeur courant plus 1.

18. Procédé selon la revendication 17, **caractérisé en ce que**, dans le cas où la vérification est réalisée avec succès, on incrémente la valeur du compteur monotone alors que dans le cas où cette vérification échoue, on vérifie le code d'authentification (Auth_C) du second bloc maître (MBk2).

19. Procédé selon l'une des revendications 6 à 18, **caractérisé en ce qu'**il comporte les étapes successives suivantes de calcul et d'écriture d'un bloc maître à l'aide de la valeur courante du compteur monotone plus 1, d'incrémentation de la valeur successive du compteur monotone ; d'écriture du second bloc maître (MBk2) puis d'écriture du dernier bloc de données.

20. Procédé selon l'une des revendications 6 à 19, **caractérisé en ce que**, l'entité de calcul (12) conserve en mémoire vive les résultants des calculs effectués sur les groupes des données et utilise les résultats de ces calculs pour le calcul des MAC des premier (Auth_A) et second (Auth_B) codes d'authentification, la taille des groupes étant notée dans le bloc maître.

21. Utilisation d'un système selon l'une des revendications 1 à 5 et/ou d'un procède selon l'une des revendications 6 à 20, pour la sécurisation des données contre, d'une part, le rejeu et, d'autre part, des interruptions brutales de service.

## Patentansprüche

1. System (10) zur Sicherung von Daten (DBk), das enthält
einen monotonen Zähler (11);
eine Rechenentität (12);
einen physikalischen Datenträger (14), der aufweist
einen oder eine Vielzahl von Datenblöcken (DBk1, DBk2, DBk3, DBk4),
einen ersten Master-Block (MBk1), der einen Wert gleich einem laufenden Wert des monotonen Zählers (11) plus 1 (V_{c}+1), eine Kennung (IDₗₐₛₜ) des letzten auf den Träger (14) geschriebenen Datenblocks (DBk), einen ersten Authentifizierungscode (Auth_A), der die Authentizität des oder der geschriebenen Datenblöcke garantiert, einen ausgehend vom letzten geschriebenen Datenblock berechneten zweiten Authentifizierungscode (Auth_B), wobei diese Daten auf einen neutralen Wert festgelegt sind, und einen dritten Authentifizierungscode (Auth_C) enthält, der die Authentizität des ersten Master-Blocks (MBk1) garantiert, und einen zweiten Master-Block (MBk2), der eine Replikation des ersten Master-Blocks (MBk1) bildet; und
einen Authentifizierungsschlüssel (15).

2. System (10) nach Anspruch 1, **dadurch gekennzeichnet, dass** der erste Authentifizierungscode (Auth_A) außerdem die Integrität des oder der geschriebenen Datenblöcke garantiert, und dass der dritte Authentifizierungscode (Auth_C) außerdem die Integrität des Master-Blocks garantiert.

3. System (10) nach einem der Ansprüche 1 oder 2, **dadurch gekennzeichnet, dass** der zweite Authentifizierungscode (Auth_B) ausgehend vom letzten geschriebenen Datenblock, wobei die Daten dieses letzten Blocks auf einen neutralen Wert festgelegt sind, und ausgehend von den Daten der anderen Datenblöcke berechnet wird, die unverändert beibehalten werden.

4. System nach einem der Ansprüche 1 bis 3, **dadurch gekennzeichnet, dass** der Authentifizierungsschlüssel (15) im ersten (MBk1) und im zweiten (MBk2) Master-Block enthalten ist, und
dass es außerdem vorteilhafterweise einen Systemschlüssel (13) enthält, wobei der Authentifizierungsschlüssel (15) vorteilhafterweise vom Systemschlüssel (13) verschlüsselt wird.

5. System (10) nach einem der Ansprüche 1 bis 4, **dadurch gekennzeichnet, dass** die Datenblöcke (DBk1, DBk2, DBk3, DBk4) von einem Verschlüsselungsschlüssel verschlüsselt werden, wobei der Verschlüsselungsschlüssel vorteilhafterweise vom Systemschlüssel (13) verschlüsselt wird.

6. Verfahren zur Datensicherung, das die folgenden Schritte aufweist:
Bereitstellung eines monotonen Zählers (11), einer Rechenentität (12), eines physikalischen Datenträgers (14) und eines Authentifizierungsschlüssels (15); und
Schreiben, auf den Träger (14), eines oder einer Vielzahl von Datenblöcken (DBk1, DBk2, DBk3, DBk4), eines ersten Master-Blocks (MBk1), der einen Wert gleich einem laufenden Wert des monotonen Zählers (11) plus 1 (V_{c}+1), eine Kennung (IDₗₐₛₜ) des letzten auf den Träger (14) geschriebenen Datenblocks (DBk), einen ersten Authentifizierungscode (Auth_A), der die Authentizität des oder der geschriebenen Datenblöcke garantiert, einen ausgehend vom letzten geschriebenen Datenblock berechneten zweiten Authentifizierungscode (Auth_B), wobei diese Daten auf einen neutralen Wert festgelegt sind, und einen dritten Authentifizierungscode (Auth_C) enthält, der die Authentizität des ersten Master-Blocks (MBk1) garantiert, und eines zweiten Master-Blocks (MBk2), der eine Replikation des ersten Master-Blocks (MBk1) bildet.

7. Verfahren nach Anspruch 6, **dadurch gekennzeichnet, dass** die Kohärenz des Systems (10) bei seinem Start überprüft wird.

8. Verfahren nach Anspruch 7, **dadurch gekennzeichnet, dass** zur Überprüfung der Kohärenz des Systems (10) die Zulässigkeit des Formats des ersten Master-Blocks (MBk1) überprüft wird, und in dem Fall, in dem der erste Master-Block (MBk1) unzulässig ist, die Zulässigkeit des zweiten Master-Blocks (MBk2) überprüft wird, wobei in dem Fall, in dem das Format des zweiten Master-Blocks (MBk2) zulässig ist, der erste Master-Block (MBk1) durch den zweiten Master-Block (MBk2) ersetzt wird, und in dem Fall, in dem das Format des zweiten Master-Blocks (MBk2) unzulässig ist, das System als endgültig beschädigt angesehen wird.

9. Verfahren nach Anspruch 7 oder 8, **dadurch gekennzeichnet, dass** zur Überprüfung der Kohärenz des Systems (10) der dritte Authentifizierungscode (Auth_C) überprüft wird, dann, in dem Fall, in dem der dritte Authentifizierungscode (Auth_C) erfolgreich überprüft wurde, der erste Authentifizierungscode (Auth_A) überprüft wird, wobei in dem Fall, in dem die Überprüfung des dritten Authentifizierungscodes (Auth_C) fehlschlägt, eine Prozedur der Wiederherstellung des Master-Blocks (MBk1) ausgelöst wird, und wenn die Überprüfung des ersten Authentifizierungscodes (Auth_A) fehlschlägt, eine Prozedur der Wiederherstellung der Daten ausgelöst wird.

10. Verfahren nach einem der Ansprüche 6 bis 9, **dadurch gekennzeichnet, dass** zum Schreiben neuer Daten die Zulässigkeit des Formats des Master-Blocks (MBk1) überprüft wird, dann der dritte Authentifizierungscode (Auth_C) überprüft wird.

11. Verfahren nach einem der Ansprüche 6 bis 10, **dadurch gekennzeichnet, dass** zum Schreiben neuer Daten ein neuer erster Master-Block (MBk1') generiert wird, der monotone Zähler (11) inkrementiert wird, der neue erste Master-Block (MBk1') geschrieben wird, der neue zweite Master-Block (MBk2') geschrieben wird, dann die neuen Daten geschrieben werden.

12. Verfahren nach Anspruch 11, **dadurch gekennzeichnet, dass** zum Generieren des neuen ersten Master-Blocks (MBk1') die Kennung des letzten Datenblocks aktualisiert wird, der laufende Wert des monotonen Zählers (11) wiederhergestellt wird, der laufende Wert (V_{c}) plus 1 dieses Zählers im neuen Master-Block (MBk1') notiert wird, dann die Authentifizierungscodes ausgehend vom so gebildeten neuen ersten Master-Block (MBk1') berechnet werden.

13. Verfahren nach einem der Ansprüche 6 bis 12, **dadurch gekennzeichnet, dass** zum Lesen von Daten die Zulässigkeit des ersten Master-Blocks (MBk1) überprüft wird, dann der dritte Authentifizierungscode (Auth_C) überprüft wird.

14. Verfahren nach einem der Ansprüche 6 bis 13, **dadurch gekennzeichnet, dass** es einen Schritt der Wiederherstellung der Daten aufweist, wobei dieser Schritt automatisch erfolgt, ohne dass das System (10) neugestartet wird.

15. Verfahren nach Anspruch 14, **dadurch gekennzeichnet, dass** für die Wiederherstellung der Daten ein Authentifizierungscode berechnet wird, indem die letzten geschriebenen Daten mit einem vordefinierten neutralen Wert gefüllt werden, und wenn das Ergebnis dieser Berechnung gleich dem zweiten Authentifizierungscode (Auth_B) ist, die Daten des neutralen Werts gefüllt werden und der zweite Authentifizierungscode (Auth_B) im ersten Authentifizierungscode (Auth_A) dupliziert wird, der dritte Authentifizierungscode (Auth_C) berechnet wird, indem der laufende Wert des monotonen Zählers plus 1 verwendet wird, dann der monotone Zähler inkrementiert und der Master-Block dupliziert wird.

16. Verfahren nach einem der Ansprüche 6 bis 15, **dadurch gekennzeichnet, dass** es einen Schritt der automatischen Wiederherstellung eines Master-Blocks aufweist.

17. Verfahren nach Anspruch 16, **dadurch gekennzeichnet, dass** für die Wiederherstellung eines Master-Blocks der laufende Wert des monotonen Zählers wiederhergestellt wird, und wenn der im Master-Block angezeigte Wert des monotonen Zählers gleich diesem Wert plus 1 ist, der dritte Authentifizierungscode (Auth_C) überprüft wird, indem angenommen wird, dass der Wert des monotonen Zählers gleich dem laufenden Wert plus 1 ist.

18. Verfahren nach Anspruch 17, **dadurch gekennzeichnet, dass** in dem Fall, in dem die Überprüfung erfolgreich durchgeführt wird, der Wert des monotonen Zählers inkrementiert wird, während, wenn diese Überprüfung fehlschlägt, der Authentifizierungscode (Auth_C) des zweiten Master-Blocks (MBk2) überprüft wird.

19. Verfahren nach einem der Ansprüche 6 bis 18, **dadurch gekennzeichnet, dass** es die folgenden aufeinanderfolgenden Rechen- und Schreibschritte eines Master-Blocks mit Hilfe des laufenden Werts des monotonen Zählers plus 1, der Inkrementierung des nachfolgenden Werts des monotonen Zählers; des Schreibens des zweiten Master-Blocks (MBk2) und dann des Schreibens des letzten Datenblocks enthält.

20. Verfahren nach einem der Ansprüche 6 bis 19, **dadurch gekennzeichnet, dass** die Rechenentität (12) im Arbeitsspeicher die Ergebnisse der an den Gruppen der Daten ausgeführten Berechnungen beibehält und die Ergebnisse dieser Berechnungen für die Berechnung der MAC der ersten (Auth_A) und zweiten (Auth_B) Authentifizierungscodes verwendet, wobei die Größe der Gruppen im Master-Block notiert wird.

21. Verwendung eines Systems nach einem der Ansprüche 1 bis 5 und/oder eines Verfahrens nach einem der Ansprüche 6 bis 20 zur Sicherung der Daten gegenüber einerseits dem Replay und andererseits unerwarteten Dienstunterbrechungen.

## Claims

1. System (10) for securing data (DBk), comprising:
a monotonic counter (11);
a calculation entity (12);
a physical data medium (14) comprising
one or a plurality of data blocks (DBk1, DBk2, DBk3, DBk4),
a first master block (MBk1) comprising a value equal to a current value of the monotonic counter (11) plus 1 (V_{c} + 1), an identifier (IDₗₐₛₜ) of the last data block (DBk) written on said medium (14), a first authentication code (Auth_A) guaranteeing the authenticity of the data block or blocks written, a second authentication code (Auth_B) calculated on the basis of the last data block written, these data being fixed at a neutral value, and a third authentication code (Auth_C) guaranteeing the authenticity of the first master block (MBk1), and
a second master block (MBk2) forming a replica of the first master block (MBk1); and
an authentication key (15).

2. System (10) according to Claim 1, **characterized in that** the first authentication code (Auth_A) furthermore guarantees the integrity of the data block or blocks written and **in that** the third authentication code (Auth_C) furthermore guarantees the integrity of the master block.

3. System (10) according to either of Claims 1 and 2, **characterized in that** the second authentication code (Auth_B) is calculated on the basis of the last data block written, the data of this last block being fixed at a neutral value, and on the basis of the data of the other data blocks, which data are preserved as is.

4. System according to one of Claims 1 to 3, **characterized in that** the authentication key (15) is contained in the first (MBk1) and the second (MBk2) master blocks and
**in that** it furthermore advantageously comprises a system key (13), said authentication key (15) advantageously being enciphered by said system key (13) .

5. System (10) according to one of Claims 1 to 4, **characterized in that** the data blocks (DBk1, DBk2, DBk3, DBk4) are enciphered by an encipherment key,
the encipherment key advantageously being enciphered by the system key (13).

6. Method for securing data, comprising the following steps of:
provision of a monotonic counter (11), of a calculation entity (12), of a physical data medium (14) and of an authentication key (15); and of
writing, on said medium (14), of one or of a plurality of data blocks (DBk1, DBk2, DBk3, DBk4), of a first master block (MBk1) comprising a value equal to a current value of the monotonic counter (11), plus 1 (V_{c} + 1), an identifier (IDₗₐₛₜ) of the last data block (DBk) written on said medium (14), a first authentication code (Auth_A) guaranteeing the authenticity of the data block or blocks written, a second authentication code (Auth_B) calculated on the basis of the last data block written, these data being fixed at a neutral value, and a third authentication code (Auth_C) guaranteeing the authenticity of the first master block (MBk1), and of a second master block (MBk2) forming a replica of the first master block (MBk1).

7. Method according to Claim 6, **characterized in that** the coherence of the system (10) is verified upon startup thereof.

8. Method according to Claim 7, **characterized in that**, for the verification of the coherence of the system (10), the licitness of the format of the first master block (MBk1) is verified and, in the case where said first master block (MBk1) is illicit, the licitness of the second master block (MBk2) is verified knowing that, in the case where the format of the second master block (MBk2) is licit, the first master block (MBk1) is replaced with the second master block (MBk2) and, in the case where the format of the second master block (MBk2) is illicit, the system is considered to be definitively corrupted.

9. Method according to Claim 7 or 8, **characterized in that**, for the verification of the coherence of the system (10), the third authentication code (Auth_C) is verified and then, in the case where said third authentication code (Auth_C) is verified with success, the first authentication code (Auth_A) is verified knowing that, in the case where the verification of the third authentication code (Auth_C) fails, a procedure for recovery of the master block (MBk1) is triggered and that, if the verification of the first authentication code (Auth_A) fails, a procedure for recovery of the data is triggered.

10. Method according to one of Claims 6 to 9, **characterized in that**, for the writing of new data, the licitness of the format of the master block (MBk1) is verified and then the third authentication code (Auth_C) is verified.

11. Method according to one of Claims 6 to 10, **characterized in that**, for the writing of new data, a new first master block (MBk1') is generated, the monotonic counter (11) is incremented, the new first master block (MBk1') is written, the new second master block (MBk2') is written and then the new data are written.

12. Method according to Claim 11, **characterized in that**, to generate the new first master block (MBk1'), the identifier of the last data block is updated, the current value of the monotonic counter (11) is recovered, the current value (V_{c}) plus 1 of this counter is noted in the new first master block (MBk1'), and then the authentication codes are calculated on the basis of the new first master block (MBk1') thus constructed.

13. Method according to one of Claims 6 to 12, **characterized in that**, for the reading of data, the licitness of the first master block (MBk1) is verified and then the third authentication code (Auth_C) is verified.

14. Method according to one of Claims 6 to 13, **characterized in that** it comprises a step of recovering the data, this step being performed automatically, without the system (10) being rebooted.

15. Method according to Claim 14, **characterized in that**, for the recovery of the data, an authentication code is calculated by filling the last data written with a predefined neutral value and, if the result of this calculation is equal to the second authentication code (Auth_B), the data are filled with the neutral value and the second authentication code (Auth_B) is duplicated in the first authentication code (Auth_A), the third authentication code (Auth_C) is calculated by using the current value of the monotonic counter plus 1, and then the monotonic counter is incremented and the master block is duplicated.

16. Method according to one of Claims 6 to 15, **characterized in that** it comprises a step of automatic recovery of a master block.

17. Method according to Claim 16, **characterized in that**, for the recovery of a master block, the current value of the monotonic counter is recovered and, if the monotonic counter value indicated in the master block is equal to this value plus 1, the third authentication code (Auth_C) is verified by assuming that the value of the monotonic counter is equal to the current value plus 1.

18. Method according to Claim 17, **characterized in that**, in the case where the verification is carried out with success, the value of the monotonic counter is incremented whilst, in the case where this verification fails, the authentication code (Auth_C) of the second master block (MBk2) is verified.

19. Method according to one of Claims 6 to 18, **characterized in that** it comprises the following successive steps of calculating and writing a master block with the aid of the current value of the monotonic counter plus 1, of incrementing the successive value of the monotonic counter; of writing the second master block (MBk2) and then of writing the last data block.

20. Method according to one of Claims 6 to 19, **characterized in that** the calculation entity (12) preserves in random-access memory the results of the calculations performed on the groups of data and uses the results of these calculations for the calculation of the MACs of the first (Auth_A) and second (Auth_B) authentication codes, the size of the groups being noted in the master block.

21. Use of a system according to one of Claims 1 to 5 and/or of a method according to one of Claims 6 to 20, for the securing of data against, on the one hand, replay and, on the other hand, fierce interruptions of service.
